# EUROPEAN PATENT APPLICATION

(11) **EP 4 498 319 A1**
(43) Date of publication of application: **29.01.2025**
(21) Application number: 24158217.0
(22) Date of filing: 16.02.2024
(51) Int. Cl.: G06T 7/00, G01N 23/046

(54) **METHOD AND DEVICE FOR INSPECTING ABNORMALITY IN ELECTRODES**

(30) Priority: 26.07.2023 KR 20230097719
(71) Applicant: SK On Co., Ltd., Seoul 03161 (KR)
(72) Inventor: JANG, Hye Ju, 34124 Daejeon (KR); SHIN, Dong Whan, 34124 Daejeon (KR)
(74) Representative: Stolmár & Partner Patentanwälte PartG mbB

(57) **Abstract**

According to various embodiments, there may be provided a method for inspecting an abnormality in electrodes, which includes: generating at least one vision photography image by imaging one surface of a specimen in which a plurality of electrodes are stacked; generating at least one tomography image obtained by tomography of a side in at least one corner region of the specimen based on the at least one vision photography image of the specimen; generating a 3-dimensional image of the specimen based on the at least one vision photography image and the at least one tomography image; and performing an electrode abnormality inspection on the plurality of electrodes based on the 3-dimensional image, and a device therefor.

## Description

### [BACKGROUND OF THE INVENTION]

### 1. Field of the Invention

The present disclosure relates to a method and a device for inspecting an abnormality in electrodes.

### 2. Description of the Related Art

In general, a battery pack for a vehicle is manufactured by assembling a plurality of cells to form a battery module, and then assembling a plurality of battery modules to prepare a battery pack in a form of being finally mounted on the vehicle. This type of battery module satisfies the required reference voltage and capacity by stacking and adhering a predetermined number of the cells, followed by assembling the same.

However, when stacking the plurality of cells, it is very important to manage cell stacking alignment for ensuring additional component assembly, electrical connection quality between the components, and cooling performance in the post-process.

The cells for constituting the battery module include an anode plate, a cathode plate, and a separation membrane interposed between the anode plate and the cathode plate. The anode plate is provided with an anode lead, and the cathode plate is provided with a cathode lead. The above-described cell is formed in a structure in which the anode plate, the separation membrane, and the cathode plate are sequentially stacked, and then wrapped by a pouch in this state, that is, in the form of a multi-layered structure.

A secondary battery prepared in the above-described form stores and releases an electrical energy through a chemical reaction which occurs at the electrodes during the charging and discharging processes. In this case, if positions of the electrodes are incorrect, problems may occur during the charging and discharging processes. Therefore, exactly measuring and inspecting the positions of the electrodes are one of the important processes to ensure the performance of the secondary battery.

As a device for inspecting whether positions of the electrodes are accurately aligned, there is an inspection device used in the art, which precisely measures the positions of electrodes inside a battery using radiation such as X-rays, and analyzes the measured results to determine the positional accuracy of the electrodes.

In order to inspect the alignment of the electrodes of these battery cells, it is measured and determined whether a gap between the electrodes occurs in an edge region of a jelly roll. However, there is a possibility that errors in the alignment inspection may occur only by the measurement of the gap in a diagonal direction of the jelly roll.

As a solution to solve this problem, there is a method for inspecting the alignment of electrodes in a battery cell disclosed in the art, which includes: measuring gap dimension data between an anode plate and a cathode plate at two points in an edge region of the battery cell; and precisely calculating a gap between the closest electrode plates by reflecting the measured gap dimension data in the image acquired by X-ray photography, thereby it is possible to determine good or defective products based on alignment information acquired by the calculated gap.

However, this disclosed method still has a problem in that the electrode alignment is determined using tomography images obtained by imaging two different points of the battery cell, that is, a partial region of the battery, and thus cannot detect an abnormality in electrodes occurring in a blind spot.

### [SUMMARY OF THE INVENTION]

It is an object of the present disclosure to provide a method and a device for inspecting an abnormality in electrodes, in order to improve reliability of abnormality determination inspection results for multi-layered electrodes of a battery.

The problems to be solved through various embodiments are not limited to the above-described problems, and other problems not described above will be clearly understood by those skilled in the art from the following descriptions.

The method and device for determining an abnormality in electrodes of the present disclosure may be widely applied in green technology fields, such as electric vehicles, battery charging stations, as well as solar power generation, wind power generation, and the like, which use the batteries.

The method and device for determining an abnormality in electrodes of the present disclosure may be used in eco-friendly electric vehicles, hybrid vehicles, and the like, which are intended to prevent climate change by suppressing air pollution and greenhouse gas emission.

To achieve the above object, according to an aspect of the present disclosure, there is provided a method for inspecting an abnormality in electrodes, which includes: generating at least one vision photography image by imaging one surface of a specimen in which a plurality of electrodes are stacked; generating at least one tomography image obtained by tomography of a side in at least one corner region of the specimen based on the at least one vision photography image of the specimen; generating a 3-dimensional image of the specimen based on the at least one vision photography image and the at least one tomography image; and performing an electrode abnormality inspection on the plurality of electrodes based on the 3-dimensional image.

The step of generating at least one vision photography image may include: determining a center point of the one surface in the vision photography image; and determining placement information of first electrodes extracted from the vision photography image based on the center point.

The step of generating at least one tomography image may include performing tomography of a side in the at least one corner region of the specimen based on the center point.

The step of generating a 3-dimensional image of the specimen may include generating the 3-dimensional image of the specimen based on electrode arrangement information included in the at least one tomography image of the side in the at least one corner region.

The step of generating a 3-dimensional image of the specimen may include generating predicted electrode arrangement images for sides of other corner regions except the side in the at least one corner region where tomography has been performed among the plurality of electrodes of the specimen based on the electrode arrangement information.

The step of generating a 3-dimensional image of the specimen may include determining placement information for each of the plurality of electrodes based on the electrode arrangement information on the basis of the center point determined for the one surface, and wherein the 3-dimensional image may include a whole image of each of the plurality of electrodes reconstructed according to the placement information for each of the plurality of electrodes.

When two corner regions are included as the at least one corner region, the two corner regions as the at least one corner region may not be adjacent to each other.

According to another aspect of the present disclosure, there is provided a device for inspecting an abnormality in electrodes, which includes: an imaging controller configured to generate at least one vision photography image by imaging one surface of a specimen in which a plurality of electrodes are stacked, and generate at least one tomography image obtained by tomography of a side in at least one corner region of the specimen based on the at least one vision photography image of the specimen; a specimen image generation unit configured to generate a 3-dimensional image of the specimen based on the at least one vision photography image and the at least one tomography image; and an electrode inspection unit configured to perform an electrode abnormality inspection on the plurality of electrodes based on the 3-dimensional image.

The imaging controller may determine a center point of the one surface in the vision photography image, and may determine placement information of first electrodes extracted from the vision photography image based on the center point.

The imaging controller may perform tomography of a side in the at least one corner region of the specimen based on the center point.

The specimen image generation unit may generate the 3-dimensional image of the specimen based on electrode arrangement information included in the at least one tomography image of the side in the at least one corner region.

The specimen image generation unit may generate predicted electrode arrangement images for sides of other corner regions except the side in the at least one corner region where tomography has been performed among the plurality of electrodes of the specimen based on the electrode arrangement information.

The specimen image generation unit may determine placement information for each of the plurality of electrodes based on the electrode arrangement information on the basis of the center point determined for the one surface, and wherein the 3-dimensional image may include a whole image of each of the plurality of electrodes reconstructed according to the placement information for each of the plurality of electrodes.

When two corner regions are included as the at least one corner region, the two corner regions as the at least one corner region may not be adjacent to each other.

According to various embodiments, it is possible to accurately predict the alignment in corner regions of electrodes in which imaging is not performed based on vision photography images and tomography images obtained by imaging a portion of the specimen.

According to various embodiments, it is possible to improve the speed and accuracy of determining a state of the specimen by performing an electrode abnormality inspection using the 3-dimensional image in which the specimen is accurately implemented, and thus to reduce the consumption of materials used for defective batteries. Further, it is possible to reduce the manpower required to maintain the production quality of the battery.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a block diagram illustrating the configuration of a device according to an embodiment;
FIG. 2 is a view schematically illustrating a partial configuration of an imaging system for imaging a specimen in the device according to an embodiment;
FIG. 3 is a view schematically illustrating an imaging direction according to the imaging system of the specimen in an electrode inspection device according to an embodiment;
FIG. 4 is a block diagram schematically illustrating a processing unit for determining the electrode state of a battery by dividing the configurations depending on the functions thereof in the device according to an embodiment;
FIG. 5 is a view schematically illustrating an operation for extracting a separation membrane and an anode electrode of the specimen imaged by the device according to an embodiment;
FIG. 6 is graphs schematically illustrating electrode arrangement information acquired from a side of the specimen imaged by the device according to an embodiment and electrode arrangement information predicted based on the same;
FIG. 7 is a view schematically illustrating an electrode reconstructed in a 3-dimensional image generated by the device according to an embodiment; and
FIG. 8 is a flowchart illustrating a sequence of operations for generating a 3-dimensional image of the specimen and performing an electrode abnormality inspection in the device according to an embodiment.

### [DETAILED DESCRIPTION OF THE INVENTION]

Hereinafter, embodiments will be described in detail with reference to the accompanying drawings. However, since various changes can be made in the embodiments, the scope of the patent invention is not limited or restricted by these embodiments. It should be understood that all modifications, equivalents, and alternatives for the embodiments are included in the scope of the present invention.

The terms used in the embodiments are used only for the purpose of describing the invention, and should not be interpreted as limiting. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or combinations thereof.

Unless otherwise defined, all terms including technical or scientific terms used herein have the same meaning as commonly understood by one of ordinary skill in the art to which the present invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Further, in describing the embodiments with reference to the accompanying drawings, the same reference numerals are denoted to the same components regardless of the number of the drawings, and the same configuration will not be repeatedly described. Further, in description of the embodiments, the publicly known techniques related to the present invention, which are verified to be able to make the purport of the present invention unnecessarily obscure, will not be described in detail.

In addition, in describing components of the embodiment, the terms such as first, second, A, B, (a), (b), and the like may be used. These terms are intended to distinguish the components from other components, and do not limit the nature, sequence or order of the corresponding components.

It will be understood that when a component is described to as being "connected", "combined" or "coupled" to another component, the component may be directly connected or coupled the another component, but it may be "connected", "combined" or "coupled" to the another component intervening another component may be present.

In addition, it will be understood that when a component is described as being "connected" or "combined" by communication to another component, that component may be connected or combined by wireless or wired communication to the another component, but it may be "connected" or "combined" to the another component intervening another component may be present.

Components included in one embodiment and components including common functions will be described using the same names in other embodiments. The description given in one embodiment may be applied to other embodiments, and therefore will not be described in detail within the overlapping range, unless there is a description opposite thereto.

The device and/or 'data' processed by the device may be expressed in terms of 'information'. Here, the information may be used as a concept including the data.

The present disclosure relates to a method and a device for inspecting an abnormality in electrodes. To describe in more detail, the present disclosure relates to a method and a device for inspecting an abnormality in electrodes of a battery having a multi-layered structure in which cathode and anode electrodes are stacked. In order to inspect the alignment of the electrodes, the present disclosure may provide a method which acquires images for at least a portion of the specimen by performing vision imaging and tomography of a battery specimen having electrodes formed thereon, and generates a 3-dimensional image of the specimen based on the acquired images, and a device therefore.

According to an exemplary embodiment, a battery cell may include an electrode assembly in which a cathode, an anode, and a separation membrane are repeatedly disposed, and the electrode assembly may be referred to as a jelly roll (J/R) . The battery cell may further include a case for housing the electrode assembly. The case may be a pouch type case, but it is not limited thereto, and may have various shapes such as a prismatic type case or a cylindrical case. In the present specification, the battery having a multi-layered structure may mean the electrode assembly or an unfinished electrode assembly in which the stacking process for forming the electrode assembly is not completed.

Here, the abnormality in electrodes of the battery may include, for example, at least some of misalignment of the electrodes, electrode omission, electrode duplication, and electrode deformation (e.g., twisting or bending, etc.).

According to various embodiments, vision imaging is intended to image an external appearance of the specimen, and may include, for example, imaging using a camera including an image sensor (or video sensor).

Tomography is intended to image a cross-section (or cut surface) of the specimen. For example, the tomography method may include computed tomography (CT).

According to various embodiments, a method and a device for performing CT scan of the specimen using X-rays may be described. However, it is not limited thereto, and methods and devices for imaging the specimen in various ways, such as Γ-ray (gamma-ray) and laser, may be applied to various embodiments.

Hereinafter, preferred embodiments will be described with reference to the accompanying drawings. However, the drawings attached to the present specification serve to further understand the technical idea together with the detailed description, such that the present disclosure should not be construed as being limited only to the illustrations of the drawings.

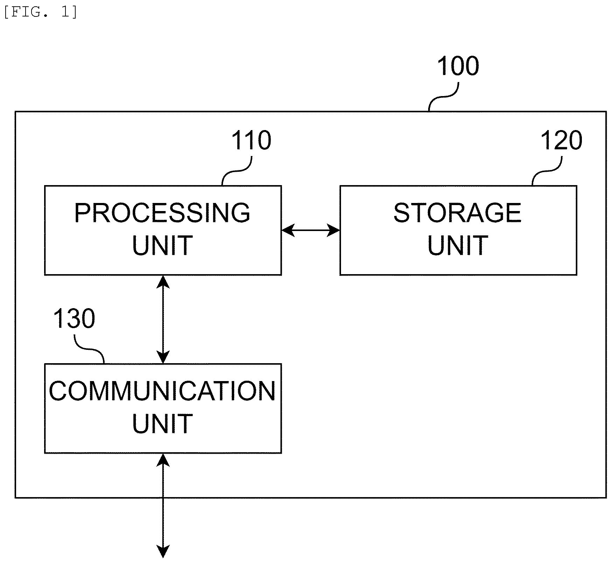

FIG. 1 is a block diagram illustrating the configuration of a device according to an embodiment.

Referring to FIG.1, a device 100 for inspecting an abnormality in electrodes may include a processing unit 110, a storage unit 120, and a communication unit 130.

The processing unit 110 may process control commands related to performance determination of an electrode inspection device through at least one program (app, application, tool, plug-in, software, etc., hereinafter referred to as an electrode abnormality determination program). In this case, the electrode abnormality determination program may be stored in the storage unit 120 of the device 100 and/or a storage unit of anther device connected to the device 100.

The processing unit 110 may share data processing and/or processing results with at least one device (e.g., a user device) connected to the device 100 through the electrode abnormality determination program.

Hereinafter, in various embodiments, it may be understood that performing an operation according to the control commands by the device 100 indicates performing an operation designated through at least one program and/or the electrode abnormality determination program related to at least one control command processing of the device 100.

Here, it will be described that the control command processing is performed through the at least one program and/or the electrode abnormality determination program installed in the device 100, but it is not limited thereto, and may be performed through another program or a temporary installation program previously provided and installed in the storage unit 120.

According to an embodiment, the control command processing may be performed through at least a portion of a database provided free of charge or for a fee in an external device connected to the device 100.

The operation of the device 100 is performed based on data processing and device control of the processing unit 110, and the processing unit 110 may also perform functions designated on the basis of the control commands received through an input/output unit (not shown) and/or the communication unit of the device 100.

Further, in processing data acquired through the communication unit 130, the processing unit 110 may process the data based on an identified user. For example, the processing unit 110 may perform an operation according to the control command input by the user device connected to the device through the communication unit 130 and/or the identified user who has been identified through user information.

The storage unit 120 may store various data processed by at least one component (e.g., the processing unit 110 or the communication unit 130) of the device 100. The data may include, for example, a program for control command processing or data processed through the program, and/or input data and output data related thereto.

The storage unit 120 may include an algorithm for control command processing, which includes at least some of an artificial neural network algorithm, a blockchain algorithm, a deep learning algorithm, and a regression analysis algorithm, as well as mechanisms, operators, language models, and big data related thereto.

For example, the storage unit 120 may store at least one algorithm configured to extract preset parameter values from images obtained by imaging the specimen, calculate the extracted parameter values, and detect an abnormality in the electrodes forming the specimen.

The storage unit 120 may include data for confirming and processing the control and operations designated through signals received by each of devices included in the input/output unit.

The operations described as functions of the storage unit 120 are processed by the processing unit 110, and data for processing the related operations, data in process, processed data, preset data, and the like may be stored in the storage unit 120 as a database.

The data stored in the storage unit 120 may be changed, modified, deleted, and/or generated as new data by the processing unit 110 based on user input of the identified user.

The storage unit 120 may store device setting information of the device 100. The device setting information may be setting information on the device 100 and at least some of functions and services provided by the device 100.

The storage unit 120 may store user information (or user account) for at least one user. Here, the user may include an administrator who has control authority over the device 100.

The storage unit 120 may include a volatile memory, a nonvolatile memory, and/or a computer-readable recording medium as known in the art. In this case, the computer-readable recording medium may store a computer program for performing an operation to determine an abnormality in electrodes of the battery by the device 100 based on various embodiments.

The communication unit 130 may support establishment of a wired communication channel or establishment of a wireless communication channel between the device 100 and at least one other device (e.g., the user device or a server), and performing communication through the established communication channel.

The communication unit 130 may perform operations such as modulation/demodulation and encryption/decryption, etc., during performing communication, which is obvious to those skilled in the art, and therefore will not be described in more detail.

The communication unit 130 may be operated dependently on or independently from the processing unit 110, and may include one or more communication processors which support wireless communication and/or wired communication.

According to an embodiment, when supporting the wireless communication, the communication unit 130 may include at least some communication modules of wireless communication modules, for example, a cellular communication module, a near field communication module, and a global navigation satellite system (GNSS) communication module.

When supporting the wired communication, the communication unit 130 may include at least some communication modules of wired communication modules, for example, a local area network (LAN) communication module, a power line communication module, or a controller area network (CAN) communication module.

To describe in more detail, the communication unit 130 may communicate with the external device by wired and/or wirelessly through near field communication networks such as Bluetooth, Bluetooth Low Energy (BLE), WiFi, WiFi direct, Infrared Data Association (IrDA), ZigBee, UWB, and radio frequency (RF), and/or far field communication networks such as a cellular network, the Internet or a computer network (e.g., LAN or WAN).

Various types of communication modules constituting the communication unit 130 may be integrated into one component (e.g., a single chip), or may be implemented as a plurality of separate components (e.g., a plurality of chips).

According to various embodiments, the device 100 or the user device may include at least some of functions of all information and communication devices including a mobile communication terminal, a multimedia terminal, a wired terminal, a fixed terminal, an internet protocol (IP) terminal and the like.

The device 100 is a device for control command processing, and may include at least some functions of a workstation or a large-capacity database, or may be connected thereto through communication.

As the user device connected to the device 100, a mobile phone, a personal computer (PC), a portable multimedia player (PMP), a mobile internet device (MID), a smartphone, a tablet PC, a phablet PC, a laptop computer, and the like may be exemplified.

According to various embodiments, the user device will be described as a device which is connected to the device 100 and communicates therewith. For example, although not illustrated throughout the drawings, the user device may be a smartphone of the user which is connected to the device 100 through wireless communication and transmits user input so that the device 100 processes the operations related to performance determination of the electrode inspection device.

The user device may be connected to the device 100 through at least one program installed therein, or may be connected to the device 100 through at least one web page accessed on online by the device 100. To this end, the device 100 may include at least some of the functions of a terminal for processing operations to determine the performance of the electrode inspection device.

The server is one entity that exists on a network, and performs roles of a web server, a database server, and an application server. According to a preferred embodiment, the server may provide various services to the device 100 and/or the user device based on processing of the device 100.

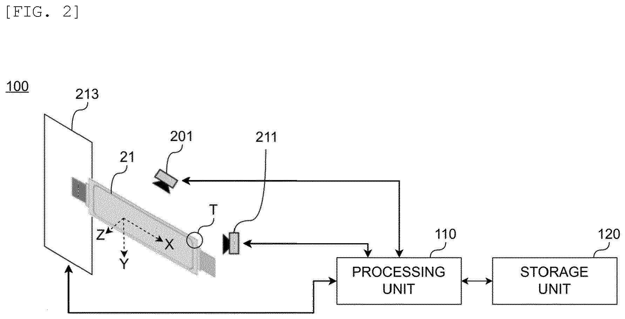

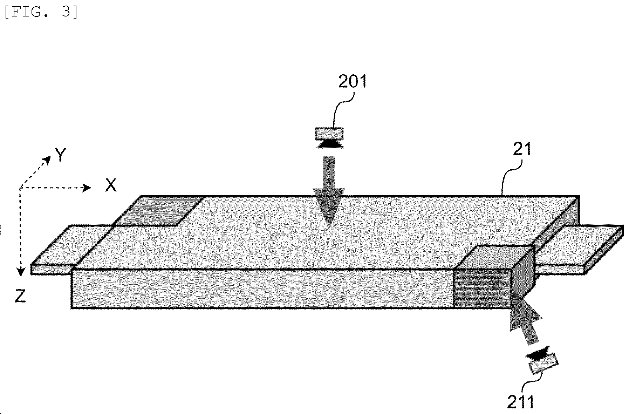

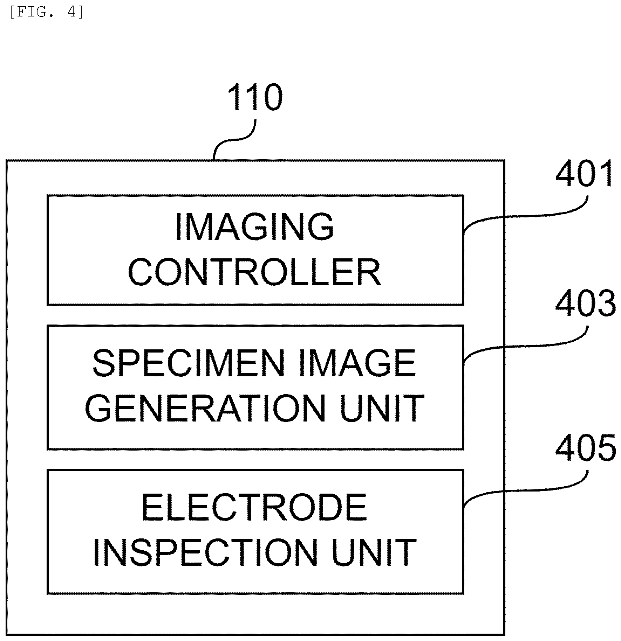

In this regard, FIG. 2 is a view schematically illustrating a partial configuration of an imaging system for imaging a specimen in the device according to an embodiment, FIG. 3 is a view schematically illustrating an imaging direction according to the imaging system of the specimen in the electrode inspection device according to an embodiment, and FIG. 4 is a block diagram schematically illustrating a processing unit for determining the electrode state of a battery by dividing the configurations depending on the functions thereof in the device according to an embodiment.

First, referring to FIGS. 2 and 3, the device 100 includes an imaging system for imaging a specimen 21, and the imaging system may include a vision imaging system for imaging an external appearance of the specimen 21, and a tomography system for imaging a cross section (or cut surface) of the specimen.

Here, the specimen 21 is a battery having a multi-layered structure formed by stacking a plurality of electrodes (or electrode layers), and the imaging system may be configured to image one surface of the specimen 21 during a process of stacking the electrodes of the specimen 21 or at a time when the stacking process of the electrodes is completed.

The electrodes constituting the specimen 21 includes a film-shaped separation membrane, an anode (-) electrode, and a cathode (+) electrode, which are configured in a stacked state, and to describe in more detail, may be configured in a state in which the cathode and anode electrodes are alternately stacked with the separation membrane interposed therebetween, such as an order of a separation membrane, an anode (-) electrode, a separation membrane, a cathode (+) electrode, a separation membrane, a anode (-) electrode,..., a separation membrane, an anode (-) electrode, and a separation membrane. In this case, an electrolyte may be contained between the cathode (+) electrode and the anode (-) electrode. Here, the order in which the anodes and cathodes are disposed may be changed.

Hereinafter, in describing various embodiments, one of the cathode (+) and the anode (-) may be referred to as a first polarity (or electrode), and the other may be referred to as a second polarity (or electrode).

In this case, an imaging unit of the vision imaging system may be configured to image a surface of the separation membrane, the anode electrode, or the cathode electrode of the specimen 21.

For example, the imaging unit of the vision imaging system may be configured to image the specimen 21 so that the entire one surface (e.g., upper surface) of the specimen 21 is included in the captured image. To this end, the imaging unit of the vision system may include at least one camera 201.

In addition, an imaging unit of the tomography system may be configured to image the arrangement of the separation membrane and/or the electrodes of the specimen 21.

For example, the imaging unit of the tomography system may be configured to perform tomography of a portion of a side of the specimen 21 by imaging the specimen 21. To this end, the imaging unit of the tomography system may include a source unit 211 and a detection unit 213.

The source unit 211 may include a device configured to generate and emit X-rays, and the detection unit 213 may include a device configured to detect the X-rays emitted from the source unit 211. In this case, the electrode inspection device may be provided with two or more source units 211 or detection units 213.

The vision imaging system and the tomography system are controlled by the processing unit 110. The processing unit 110 may generate a 3-dimensional image of the specimen 21 based on the captured images, and determine an abnormality in the electrodes of the specimen 21 based on the generated 3-dimensional image.

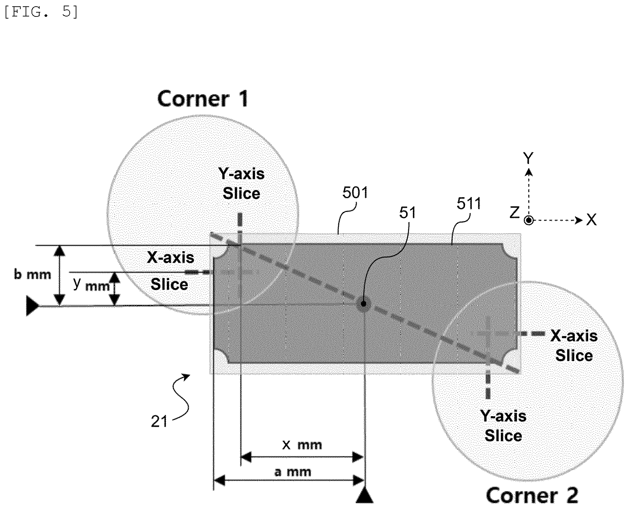

To this end, as shown in FIG. 4, the processing unit 110 may include an imaging controller 401, a specimen image generation unit 403, and an electrode inspection unit 405. Hereinafter, operations of the imaging controller 401, the specimen image generation unit 403, or the electrode inspection unit 405 will be described with reference to FIGS. 5 to 7.

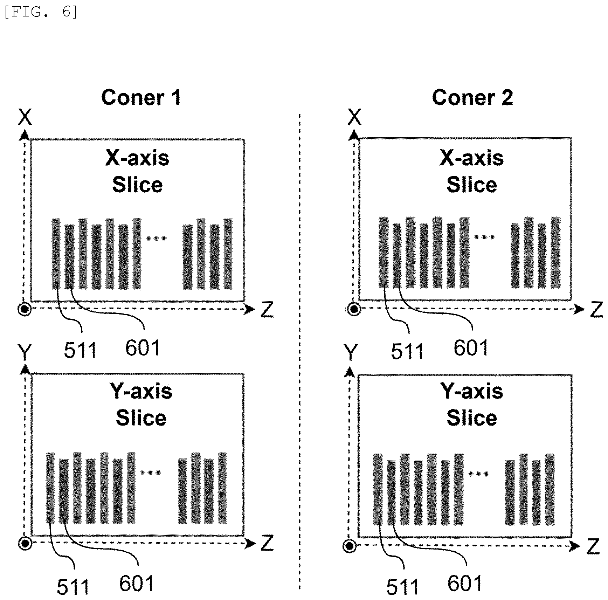

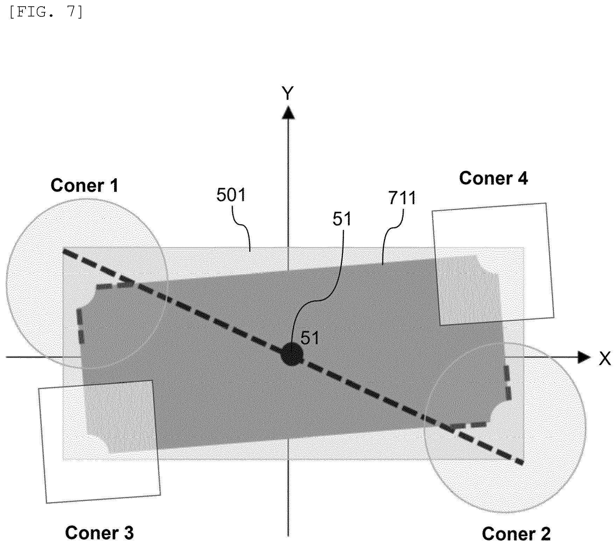

FIG. 5 is a view schematically illustrating an operation for extracting a separation membrane and an anode electrode of the specimen imaged by the device according to an embodiment, FIG. 6 is graphs schematically illustrating electrode arrangement information acquired from a side of the specimen imaged by the device according to an embodiment and electrode arrangement information predicted based on the same, and FIG. 7 is a view schematically illustrating an electrode reconstructed in a 3-dimensional image generated by the device according to an embodiment

The imaging controller 401 may control the vision imaging system to image an upper surface of the specimen 21 at one or more points during a process of stacking the separation membrane or electrodes (stacking process) of the specimen 21, or at a time after the stacking process of the specimen 21 is completed.

For example, the imaging controller 401 may acquire a vision photography image obtained by imaging the upper surface of the specimen 21 at a time after the stacking process of the specimen 21 is completed.

Thereafter, the imaging controller 401 may extract a shape of the upper surface of the specimen 21 from the acquired vision photography image. For example, the upper surface of the specimen 21 may be a translucent separation membrane 501 having a transparency, and the imaging controller 401 may extract the shape of the separation membrane 501 constituting the upper surface of the specimen 21 from the acquired vision photography image.

To describe in more detail, the imaging controller 401 may detect boundaries (e.g., edges) of the upper surface of the specimen 21 from the acquired vision photography image, and extract the shape of the separation membrane 501 based on the detected edges.

The imaging controller 401 may determine a center point 51 of the separation membrane 501 based on the extracted shape of the separation membrane 501. To describe in more detail, the imaging controller 401 may determine the center point 51 of the separation membrane 501 based on a line connecting two vertices constituting the extracted separation membrane 501.

To this end, the imaging controller 401 may set at least one 3-dimensional coordinate system for the specimen 21. For example, the imaging controller 401 may set a 3-dimensional coordinate system expressed by an X-axis (or X-axis direction) parallel to a longitudinal (or major axis direction) edge of the separation membrane 501, a Y-axis (or Y-axis direction) parallel to a lateral (or miner axis direction) edge of the separation membrane 501, and a Z-axis (or Z-axis direction) perpendicular to the surface of the separation membrane 501 (or thickness direction of the specimen 21).

Hereinafter, in the description, by using the 3-dimensional coordinate system generated for the specimen 21 as a reference coordinate system, the processing unit 110 may process information on various objects included in the images related to the specimen, for example, information related to the displacement of the separation membrane, the anode electrode, or the cathode electrode.

In addition, the imaging controller 401 may extract the shape of an electrode (e.g., an anode electrode 511) stacked under the separation membrane 501 of the specimen 21 from the acquired vision photography image. For example, the imaging controller 401 may detect boundaries (e.g., edges) of the electrode stacked under the separation membrane 501 of the specimen 21 from the acquired vision photography image, and determine the shape of the anode electrode 511 based on the detected edges.

The imaging controller 401 may determine a length between the center point 51 and the edge of the anode electrode 511 in regard to the detected anode electrode 511.

For example, the imaging controller 401 may measure a length between the center point 51 and the edge of the anode electrode 511 in a direction parallel (or perpendicular) to the X-axis or Y-axis in regard to the detected anode electrode 511.

To describe in more detail, as shown in FIG. 5, the imaging controller 401 may set regions of the specimen 21, where each of two vertices which are not adjacent to each other used in the operation for determining the center point 51 of the separation membrane 501 is located, as a first corner region (Corner 1) and a second corner region (Corner 2).

In this case, the imaging controller 401 may specify lengths to the edges of the anode electrode 511 corresponding to the first corner region and the second corner region from the center point 51. To describe the first corner as an example, the imaging controller 401 may measure a length *a* mm to the edge in the X-axis direction and a length *b* mm to the edge in the Y-axis direction in regard to the first corner region from the center point 51.

Thereafter, the imaging controller 401 may perform tomography in at least one corner region. For example, the imaging controller 401 may perform tomography on the cut surface of the specimen 21 formed in a range within *a'* mm in the X-axis direction (positive or negative direction) and/or b' mm in the Y-axis direction (positive or negative direction) from the center point 51 in each of the first corner region and the second corner region.

To describe in more detail, the imaging controller 401 controls the source unit 211 to emit X-rays toward a side of the specimen 21 from the source unit 211 in a state where the specimen 21 is disposed between the source unit 211 and the detection unit 213, and may process to generate 2-dimensional tomography images by receiving the emitted X-rays by the detection unit 213.

In this case, the source unit 211 or the detection unit 213 constituting the tomography system is configured to move about the specimen, and it is possible to control the movement of the source unit 211 or the detection unit 213 through the imaging controller 401.

Referring to FIGS. 5 and 6, the tomography image captured through the imaging controller 401 may include tomography images (or cut surface images) obtained by imaging the cross section (or cut surface) to show the displacement and arrangement of the electrodes disposed on a side face of the specimen 21.

In this case, the imaging controller 401 may control the tomography system to capture tomography images of two or more different cut surfaces in a preset region (e.g., the first corner region or the second corner region) of the specimen 21.

To describe in more detail, the imaging controller 401 may process to capture a tomography image (ZY-plane tomography image) of a ZY-axis cut surface formed by the Z-axis and the Y-axis in the first corner region or the second corner region, or capture a tomography image (ZX-plane tomography image) of a ZX-axis cut surface formed by the Z-axis and the X-axis.

For example, the imaging controller 401 may control the tomography system to image a cut surface parallel to the Z-axis in an intersection region formed by the first corner region of the specimen 21, the *a* mm range in the X-axis direction of the first corner region from the center point 51, and the *b* mm range in the Y-axis direction of the first corner region from the center point 51.

Likewise, the imaging controller 401 may control the tomography system to image a cut surface parallel to the Z-axis in an intersection region formed by the second corner region of the specimen 21, an *a'* mm range in the X-axis direction of the second corner region from the center point 51, and a *b'* mm range in the Y-axis direction of the second corner region from the center point 51.

To describe in more detail, as shown in FIG. 6, the imaging controller 401 may control the tomography system to capture a ZY-plane tomography image obtained by imaging a ZY-axis cut surface (Y-axis Slice) *x* mm away from the first corner region or the second corner region in the X-axis direction, or a ZX-plane tomography image obtained by imaging a ZX-axis cut surface (X-axis Slice) *y* mm away from the first or second corner region in the Y-axis direction.

However, the imaging controller 401 may control, without limitation thereof, the tomography system to capture a tomography image of a cut surface parallel to the Z-axis satisfying a range within *a* mm or *a'* mm in the X-axis direction and within *b* mm or *b'* mm in the Y-axis direction in each of the first corner region and the second corner region.

Referring to FIG. 6, as described above, it can be seen from the tomography images of the specimen 21 that the anode electrodes and the cathode electrodes are alternately stacked.

The imaging controller 401 may store one or more of vision photography images and tomography images acquired as described above in the storage unit 120.

The specimen image generation unit 403 may generate a 3-dimensional (3D) image of the specimen 21 based on the vision photography images and tomography images.

In this case, the specimen image generation unit 403 may generate a 3-dimensional image of the specimen 21 by reconstructing or generating the images of the electrodes based on the electrode arrangement of the electrodes included in the tomography images.

To describe in more detail, the specimen image generation unit 403 may verify placement information of the anode electrodes 511 identified from the vision photography image. For example, the specimen image generation unit 403 may determine placement information of the anode electrodes 511 on the reference coordinate system corresponding to the anode electrode 511 identified from the vision photography image.

Here, the placement information of the electrodes may include coordinates corresponding to at least a portion of each of the edges of the anode electrodes 511 on the reference coordinate system.

The specimen image generation unit 403 may verify coordinates on the reference coordinate system corresponding to the length between the center point 51 and the edge of the anode electrode 511 in the X-direction, and the length between the center point 51 and the edge of the anode electrode 511 in the Y-direction in regard to each of the first corner region and the second corner region identified from the vision photography images, and generate placement information of the anode electrodes 511 including the confirmed coordinates.

Thereafter, the specimen image generation unit 403 may determine placement information on the reference coordinate system for each of the electrodes constituting the specimen 21 based on the placement information of the anode electrodes 511 and the cut surface images acquired for the first corner region and the second corner region.

To describe in more detail, the specimen image generation unit 403 may extract electrode arrangement information for each of the anode electrodes and the cathode electrodes from the X-axis cut surface image and Y-axis cut surface image acquired from each of the first corner region and the second corner region.

Here, the electrode arrangement information may include at least some piece of information on the electrode end point for at least one electrode, the electrode length, and a gap (or interval) between adjacent electrodes for the electrodes included in the cut surface image.

At this time, in a state where the placement information on the reference coordinate system of the anode electrode 511 has already been determined, the specimen image generation unit 403 may determine end points (or lengths) of the anode electrodes 511 in the X-axis cut surface image and the Y-axis cut surface image of the specimen 21 acquired for each of the first corner region and the second corner region as reference information.

The specimen image generation unit 403 may calculate difference values between the end points (or lengths) of the respective anode electrodes 511 and the end points (or lengths) of other anode electrodes or cathode electrodes in the X-axis cut surface image and the Y-axis cut surface image of the specimen 21 acquired for each of the first corner region and the second corner region.

The specimen image generation unit 403 may determine coordinate points on the reference coordinate system corresponding to the difference values between the end points (or lengths) of the anode electrodes 511 and the end points (or lengths) of the other anode electrodes or cathode electrodes calculated for each of the first corner region and the second corner region, and may determine placement information in images of the anode electrodes (the remaining anode electrodes except the anode electrodes 511) and cathode electrodes constituting the specimen 21 based on the coordinate points on the reference coordinate system corresponding to the placement information on the reference coordinate system and the difference values of the anode electrodes 511.

In this case, it may be assumed that the shapes and sizes of the anode electrodes constituting the specimen 21 are all the same, and the shapes and sizes of the cathode electrodes are all the same.

That is, the specimen image generation unit 403 may determine placement information for each of the remaining electrodes constituting the specimen 21 (e.g., the n-th electrode 711) based on the anode electrodes 511 in which the placement information on the reference coordinate system has been confirmed. In addition, the specimen image generation unit 403 may generate (or reconstruct) electrode images for each of electrodes based on the placement information for each of the electrodes constituting the specimen 21.

That is, the specimen image generation unit 403 may implement electrode images for each of the whole electrodes based on some images of the electrodes included in the cut surface images, and implement the stacking state of the electrodes according to the placement information of the respective electrodes, thereby generating a 3-dimensional image of the specimen 21.

Accordingly, the 3-dimensional image of the specimen 21 may be configured to provide a rotatable image of the specimen 21, extract and provide images of the electrodes constituting the specimen 21, as well as provide cut surfaces inside the specimen 21 which are determined according to the user input.

The specimen image generation unit 403 may generate a 3-dimensional image of the specimen 21 based on the placement information of the anode electrodes and the cathode electrodes constituting the specimen 21.

In addition, the specimen image generation unit 403 may measure gap information between electrodes adjacent to each other, for example, the anode electrode 511 and the cathode electrode 601 in the X-axis cut surface image and the Y-axis cut surface image of the specimen 21 acquired for each of the first corner region and the second corner region.

For example, the specimen image generation unit 403 may acquire gap information including at least some piece of information of two or more gaps and an average gap parallel to the Z-axis between the anode electrode 511 and the cathode electrode 601 in each of the X-axis cut surface image and the Y-axis cut surface image of the specimen 21 acquired for each of the first corner region and the second corner region.

The specimen image generation unit 403 may predict an electrode arrangement of the cut surface on the side of the specimen 21 in at least one corner region where tomography is not performed, for example, a third corner region (Corner 3) or a fourth corner region (Corner 4), based on the gap information acquired for the electrodes adjacent to each other in each of the X-axis cut surface image and the Y-axis cut surface image of the specimen 21 acquired for each of the first corner region and the second corner region, and the previously generated 3-dimensional image of the specimen 21.

That is, the specimen image generation unit 403 may generate a 3-dimensional image of the specimen 21 in which both the placement information for each of the electrodes constituting the specimen 21 and the gap information between the electrodes adjacent to each other are implemented.

The electrode inspection unit 405 may perform an electrode abnormality inspection on a plurality of electrodes constituting the specimen 21 based on the 3-dimensional image generated for the specimen 21.

For example, the electrode inspection unit 405 may perform the electrode abnormality inspection for misalignment, electrode omission, electrode duplication, or electrode deformation based on the images (electrode images) of each of the plurality of electrodes implemented in the 3-dimensional image of the specimen 21.

When it is determined that the electrodes are abnormal (or in an abnormal state) as a result of the electrode abnormality inspection performed through the 3-dimensional image of the specimen 21, the electrode inspection unit 405 may record a cause that has determined the abnormality in the corresponding electrodes (e.g., at least some of misalignment, electrode omission, electrode duplication, and electrode deformation), and output the abnormality in the electrodes of the corresponding specimen 21.

When determining the specimen 21 as an abnormal state, the processing unit 110 may process so that the specimen 21 that has been determined to be in the abnormal state is discharged from a battery production process.

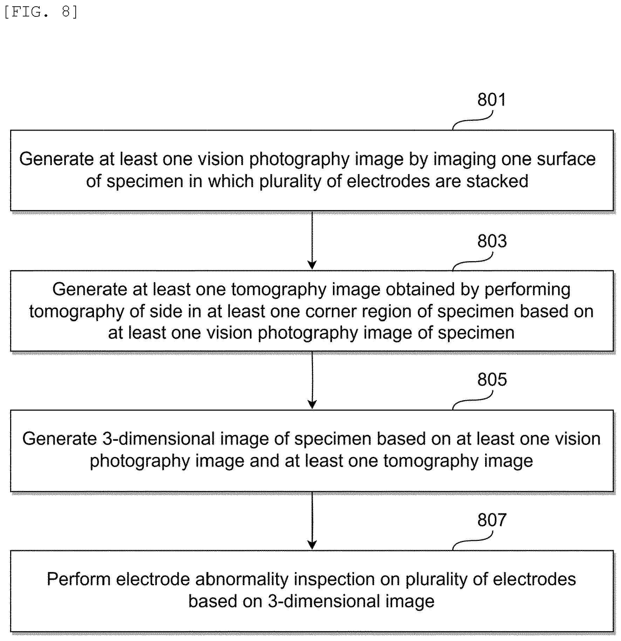

FIG. 8 is a flowchart illustrating a sequence of operations for generating a 3-dimensional image of the specimen and performing an electrode abnormality inspection in the device according to an embodiment.

As described above, the imaging controller 401 may generate at least one vision photography image by imaging one surface of the specimen 21 in which a plurality of electrodes are stacked (801). In this case, the one surface is the separation membrane 501 disposed on the upper surface of the specimen 21, and the acquired vision photography image may be in a state where the separation membrane 501 of the specimen 21 and the anode electrode 511 stacked below the separation membrane are displayed.

The imaging controller 401 may determine the center point 51 of the one surface in the vision photography image, and determine placement information of the anode electrodes 511 extracted from the vision photography image based on the center point 51.

The imaging controller 401 may generate at least one tomography image obtained by imaging a side in at least one corner region of the specimen 21 based on the at least one vision photography image of the specimen (803). In this case, the imaging controller 401 may perform tomography of a side in the at least one corner region of the specimen based on the center point 51.

In this case, the imaging controller 401 may perform tomography of the cut surface of the specimen 21 within a designated range from the center point 51 as described above. To describe in more detail, the imaging controller 401 acquires tomography images obtained by imaging at least one cut surface parallel to the Z-axis within the anode electrode 511 plane in at least partial corner region of the first corner region and the second corner region.

Thereafter, the specimen image generation unit 403 may generate a 3-dimensional image of the specimen 21 based on the at least one vision photography image and the at least one tomography image (805).

In this case, the specimen image generation unit 403 may generate a 3-dimensional image of the specimen based on electrode arrangement information included in the at least one tomography image on the side in the at least one corner region.

To describe in more detail, the specimen image generation unit 403 may determine placement information on the reference coordinate system for the anode electrode 511 based on the vision photography image.

The specimen image generation unit 403 may determine (or predict) the placement information on the reference coordinate system for each of the plurality of electrodes constituting the specimen 21 based on the placement information on the reference coordinate system for the anode electrodes 511 and electrode arrangement information for the plurality of electrodes included in each of the tomography images. Here, the specimen image generation unit 403 may determine placement information for each of the plurality of electrodes based on the center point 51.

In addition, the specimen image generation unit 403 may generate predicted electrode arrangement images for the sides of the other corner regions except the side in the at least one corner region where tomography has been performed among the plurality of electrodes of the specimen based on the electrode arrangement information.

That is, by using the electrode arrangement information for the plurality of electrodes included in the tomography images of the corner region where the tomography has been performed and the placement information for the anode electrode 511 in the vision photography images, the specimen image generation unit 403 may predict the electrode arrangement information for the plurality of electrodes constituting the specimen 21 in at least one remaining corner region where tomography is not performed.

The specimen image generation unit 403 may generate a 3-dimensional image of the specimen 21 in which the plurality of electrodes are disposed according to the placement information on the reference coordinate system for each of the plurality of electrodes constituting the specimen, electrode arrangement information of the plurality of electrodes, and the predicted electrode arrangement information.

The electrode inspection unit 405 may perform an electrode abnormality inspection on the plurality of electrodes based on the 3-dimensional image (807).

The electrode inspection unit 405 may determine whether there is an abnormality in the electrodes for the misalignment, electrode omission, electrode duplication, and electrode deformation based on the images of the plurality of electrodes constituting the 3-dimensional image of the specimen 21, and when at least one abnormality is detected, may determine that the electrode of the corresponding specimen 21 is in an abnormal state.

When it is determined that the electrodes are abnormal, the electrode inspection unit 405 may record the cause that has determined the abnormality in the corresponding electrodes (e.g., at least some of misalignment, electrode omission, electrode duplication, and electrode deformation), and output the abnormality in the electrodes of the corresponding specimen 21 and/or discharge the specimen 21 that has been determined to be in the abnormal state from the battery production process.

On the other hand, when an abnormality in the electrodes is not detected, the electrode inspection unit 405 may perform step 801 for the next specimen to be inspected, and perform the embodiments of FIG. 8 on the next specimen to be inspected.

According to various embodiments, the electrode inspection unit 405 may improve the accuracy of electrode abnormality inspection by comparing the vision photography images captured for two or more of the electrode and the separation membrane in the electrode stacking process of the specimen 21 through the imaging controller 401 with the electrode images of the specimen 21 corresponding thereto.

To describe in more detail, the 3-dimensional image of the specimen 21 generated as described above includes electrode images for each of the plurality of electrodes constituting the specimen 21, and in this state, the electrode alignment and gap between the electrodes adjacent to each other may be implemented according to the placement information for each of the plurality of electrodes.

That is, the electrode inspection unit 405 may perform the electrode abnormality inspection by extracting electrode images corresponding to the electrodes included in the vision photography images acquired for two or more electrodes during the electrode stacking process of the specimen and the vision photography images among the electrode images constituting the 3-dimensional image of the specimen 21, and comparing their placement information and electrode arrangement information with each other.

According to various embodiments, it is possible to accurately predict the alignment in corner regions of electrodes in which imaging is not performed based on vision photography images and tomography images obtained by imaging a portion of the specimen.

According to various embodiments, it is possible to improve the speed and accuracy of determining a state of the specimen by performing an electrode abnormality inspection using the 3-dimensional image in which the specimen is accurately implemented, and thus to reduce the consumption of materials used for defective batteries. Further, it is possible to reduce the manpower required to maintain the production quality of the battery.

According to the detailed description above, the functions of various embodiments described as being performed by the device 100 are operations processed through the processing unit 110 of the device 100, and may be performed by organically being connected to the device 100 and/or components of the device connected to the device 100.

As described above, although the embodiments have been described with reference to the limited drawings, it will be apparent to those skilled in the art that various modifications and alternations may be applied thereto based on the various embodiments.

For example, adequate effects may be achieved even if the foregoing processes and methods are carried out in different order than those described above, and/or the above-described elements, such as systems, structures, devices, or circuits, are combined or coupled in different forms and modes than those described above, or substituted or switched with other components or equivalents.

In particular, when describing with reference to the flowchart, it has been described that a plurality of steps are configured and the steps are sequentially executed in a designated order, but it is not necessarily limited to the designated order.

In other words, executing by changing or deleting at least some of the steps described in the flowchart or adding at least one step is applicable as an embodiment, and executing one or more steps in parallel may also be applicable as an embodiment. That is, it is not limited to that the steps are necessarily operated in a time-series order, and should be included in various embodiments of the present disclosure.

Therefore, other implements, other embodiments, and equivalents to claims are within the scope of claims to be describe below.

## Claims

1. A method for inspecting an abnormality in electrodes, the method comprising:
generating at least one vision photography image by imaging one surface of a specimen in which a plurality of electrodes are stacked;
generating at least one tomography image obtained by tomography of a side in at least one corner region of the specimen based on the at least one vision photography image of the specimen;
generating a 3-dimensional image of the specimen based on the at least one vision photography image and the at least one tomography image; and
performing an electrode abnormality inspection on the plurality of electrodes based on the 3-dimensional image.

2. The method according to claim 1 or 2, wherein the step of generating at least one vision photography image comprises: determining a center point of the one surface in the vision photography image; and determining placement information of first electrodes extracted from the vision photography image based on the center point.

3. The method according to claim 2, wherein the step of generating at least one tomography image comprises performing tomography of a side in the at least one corner region of the specimen based on the center point.

4. The method according to one of claims 1 to 3, wherein the step of generating a 3-dimensional image of the specimen comprises generating the 3-dimensional image of the specimen based on electrode arrangement information included in the at least one tomography image of the side in the at least one corner region.

5. The method according to claim 4, wherein the step of generating a 3-dimensional image of the specimen comprises generating predicted electrode arrangement images for sides of other corner regions except the side in the at least one corner region where tomography has been performed among the plurality of electrodes of the specimen based on the electrode arrangement information.

6. The method according to claim 4, wherein the step of generating a 3-dimensional image of the specimen comprises determining placement information for each of the plurality of electrodes based on the electrode arrangement information on the basis of the center point determined for the one surface, and
wherein the 3-dimensional image comprises a whole image of each of the plurality of electrodes reconstructed according to the placement information for each of the plurality of electrodes.

7. The method according to one of claims 1 to 6, wherein when two corner regions are included as the at least one corner region, the two corner regions as the at least one corner region are not adjacent to each other.

8. A device for inspecting an abnormality in electrodes, the device comprising:
an imaging controller configured to generate at least one vision photography image by imaging one surface of a specimen in which a plurality of electrodes are stacked, and generate at least one tomography image obtained by tomography of a side in at least one corner region of the specimen based on the at least one vision photography image of the specimen;
a specimen image generation unit configured to generate a 3-dimensional image of the specimen based on the at least one vision photography image and the at least one tomography image; and
an electrode inspection unit configured to perform an electrode abnormality inspection on the plurality of electrodes based on the 3-dimensional image.

9. The device according to one of claim 8 or 9, wherein the imaging controller determines a center point of the one surface in the vision photography image, and determines placement information of first electrodes extracted from the vision photography image based on the center point.

10. The device according to claim 9, wherein the imaging controller performs tomography of a side in the at least one corner region of the specimen based on the center point.

11. The device according to one of claims 8 to 11, wherein the specimen image generation unit generates the 3-dimensional image of the specimen based on electrode arrangement information included in the at least one tomography image of the side in the at least one corner region.

12. The device according to claim 11, wherein the specimen image generation unit generates predicted electrode arrangement images for sides of other corner regions except the side in the at least one corner region where tomography has been performed among the plurality of electrodes of the specimen based on the electrode arrangement information.

13. The device according to claim 11, wherein the specimen image generation unit determines placement information for each of the plurality of electrodes based on the electrode arrangement information on the basis of the center point determined for the one surface, and
wherein the 3-dimensional image comprises a whole image of each of the plurality of electrodes reconstructed according to the placement information for each of the plurality of electrodes.

14. The device according to one of claims 8 to 13, wherein when two corner regions are included as the at least one corner region, the two corner regions as the at least one corner region are not adjacent to each other.
